Europäisches Patentamt

European Patent Office

Office européen des brevets

(19)

(11) Veröffentlichungsnummer: **0 211 167**
**B1**

(12) **EUROPÄISCHE PATENTSCHRIFT**

(45) Veröffentlichungstag der Patentschrift:
**19.04.89**

(51) Int. Cl.⁴: **F 27 B 13/12, C 22 B 21/00**

(21) Anmeldenummer: **86107056.3**

(22) Anmeldetag: **23.05.86**

(54) **Aluminium-Vakuum-Ofen.**

(30) Priorität: **04.07.85 DE 3523938**
**16.04.86 DE 3612758**

(43) Veröffentlichungstag der Anmeldung:
**25.02.87 Patentblatt 87/9**

(45) Bekanntmachung des Hinweises auf die Patenterteilung:
**19.04.89 Patentblatt 89/16**

(84) Benannte Vertragsstaaten:
**AT BE CH DE FR IT LI NL SE**

(56) Entgegenhaltungen:
**FR-A-1 070 925**
**FR-A-1 378 768**
**US-A-2 510 352**
**US-A-2 930 601**
**US-A-3 342 470**
**US-A-3 417 166**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Flesch, Gerhard, Elsternstrasse 21, D-4200 Oberhausen 11 (DE)**
Erfinder: **Schmidt, Rainer, Oskarstrasse 24, D-4200 Oberhausen 11 (DE)**

## Beschreibung

Die Erfindung betrifft einen kippbaren Aluminium-Vakuum-Ofen, bestehend aus einem Ofenkörper mit stirnseitigen, verschließbaren Öffnungen zum Beschicken und Reinigen und einer seitlich angeordneten, verschließbaren Ausgießschnauze.

Aluminium-Vakuum-Öfen werden seit Jahren mit im Querschnitt kreisrunder Bauform errichtet. Die Badoberfläche der bekannten Öfen ist rechteckig. Die Badtiefe ist mit Rücksicht auf eine möglichst große Kapazität und auf Grund des kreisrunden Querschnitts relativ groß gehalten.

Der Wärmeübergang bei derartigen Öfen ist infolge der Bauform verhältnismäßig ungünstig, der Brennstoffbedarf zur Erzielung einer möglichst intensiven Schmelzbadbehandlung hoch.

Aufgabe der Erfindung ist es, einen Aluminium-Vakuum-Ofen zu schaffen, der bei geringer Badtiefe eine möglichst große Badoberfläche aufweist und einen guten Wärmeübergang gewährleistet.

Diese Aufgabe wird erfindungsgemäß in der Weise gelöst, wie es in den kennzeichnenden Merkmalen der Patentansprüche angegeben ist.

Der erfindungsgemäße Ofen zeichnet sich vorteilhaft durch einen optimalen Wärmeübergang aus, der durch eine relativ geringe Badtiefe und eine große, annähernd quadratische Badoberfläche erreicht wird. Die Badtiefe kann unabhängig von der Ofengröße gewählt werden. Sie liegt in der Regel zwischen 600 und 1400 mm, infolge der durch die spezielle Bauform und die Möglichkeit der variablen Brenneranordnung erzielbaren günstigen Wärmeübergangsverhältnisse wird Brennstoff für die Beheizungseinrichtung gespart.

Für den feuerfest-Ausbau des Ofens lassen sich handelsübliche Feuerfest-Materialen verwenden. Im Gegensatz zu den Öfen des Standes der Technik erübrigen sich Anpassungsarbeiten bei der feuerfesten Auskleidung. Die ff-Auskleidung weist im übrigen immer die gleiche Stärke auf. Zusätzliche Untermauerungen sind bei dem erfindungsgemäßen Ofen ebenfalls nicht erforderlich.

Die Stirnböden des Ofenkörpers können aus gewölbten Scheiben und gebogenen Blechen zusammengesetzt werden. Auch eine Ausführung der Stirnböden aus einseitig gebogenen Blechen ist möglich.

Unter Verwendung der erfindungsgemäßen Ofenbauform lassen sich auch Aluminium-Schmelzöfen und Aluminium-Mischer ausführen.

Ein Ausführungsbeispiel des Aluminium-Vakuum-Ofens wird an Hand der schematischen zeichnung nachstehend näher erläutert. Es zeigen:

Fig. 1 einen Längsschnitt des Ofens nach A - B von Fig. 2,

Fig. 2 eine Draufsicht auf den Ofen,
Fig. 3 einen Querschnitt des Ofens nach C - D von Fig. 2 und
Fig. 4a, 4b, 4c, 4d, 4e, Einzelheiten der Stirnböden-Ausführung und Befestigung aus Fig. 1.

Der Ofenkörper (1) weist an beiden Stirnseiten verschließbare Öffnungen (2) in Gestalt von wassergekühlten Türen auf. Durch diese Öffnungen findet das Beschicken des Ofens statt. Außerdem dienen sie zur Begehung des Ofeninnenraumes zum Zwecke der Wartung und Reinigung. Die Ausgießschnauze (3) des Ofens befindet sich seitlich am Ofen. Sie ist ebenfalls verschließbar.

Ein Brenner (4) ist stirnseitig am Ofen angedeutet, und zwar in einer Ofentür (Öffnung 2). Es versteht sich, daß bei Bedarf weitere Brenner am Ofenmantel und/oder an den Stirnseiten angeordnet werden können.

Die Brenner (4) sind schwenkbar. Die Anschlußflansche werden gekühlt und erhalten vakuumdichte Verschlußdeckel.

Der Aluminium-Vakuum-Ofen kann auch mit einer getrennt vom Ofenkörper angeordneten Feuerungsanlage mit oder ohne Abgasführung betrieben werden. Eine derartige Feuerungsanlage kann fahrbar, schwenkbar und zugleich koppelbar mit dem Ofenkörper angeordnet werden.

Mit der hydraulisch betätigbaren Kippeinrichtung (5) wird ein seitliches Kippen des Ofens erzielt, womit der Ofen in Gießposition gebracht werden kann. Infolge der geringen Badtiefe des erfindungsgemäßen Aluminium-Vakuum-Ofens kommt man mit einem geringen Kippwinkel aus.

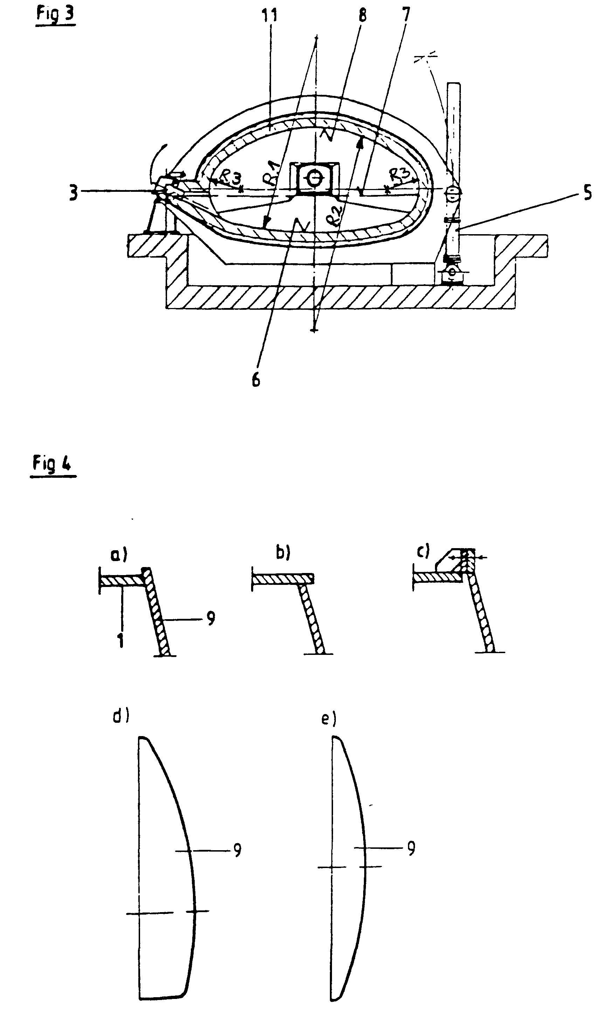

Wesentliche Merkmale des Ofens, die letztlich eine bessere metallurgische Behandlung der Schmelze bei diesem Ofen erreichen lassen, sind sein unsymmetrischer Ellipsenquerschnitt (Fig. 3), die daraus resultierende geringe Badtiefe (Abstand Ofenboden 6 zur Badoberfläche 7) und die annähernd quadratische Badoberfläche (7). Die Badtiefe ist unabhängig von der Ofengröße und in der Regel auf Werte von 600 bis 1400 mm beschränkt.

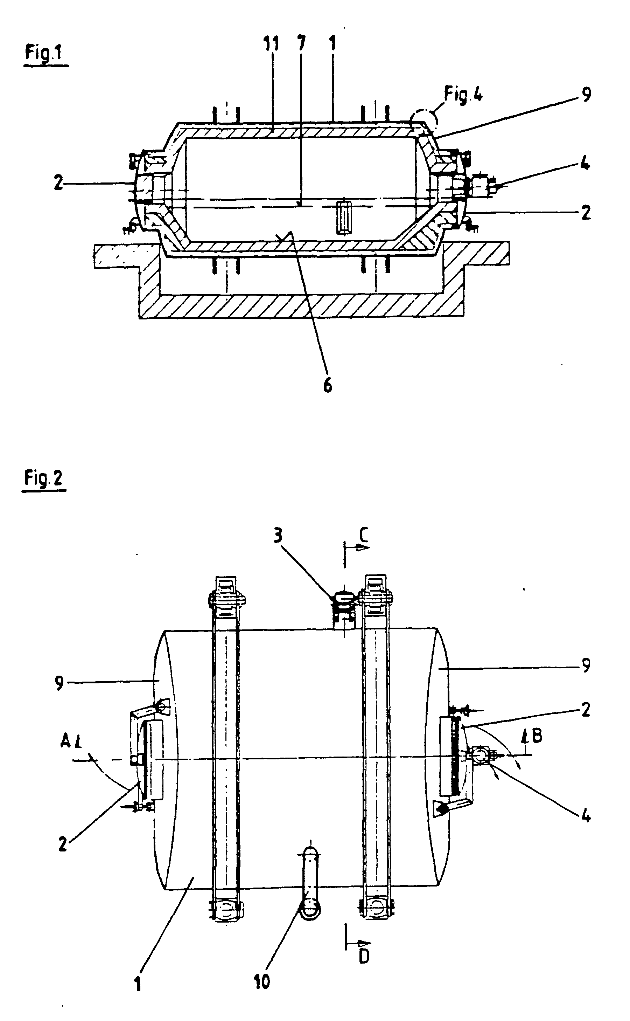

Der Radius R1 (Fig. 1) des Ofenbodens (6) ist unabhängig von dem Fassungsvermögen des Ofens konstant ausgelegt. Der Radius R2 (Fig. 3) der Ofendecke (8) ist kleiner als der Radius R1. Der Radius R3 (Fig. 3) der Seitenwände ist wiederum kleiner als der Radius R2.

Wie aus Fig. 3 ersichtlich, gehen die Radien R1 und R2 an den Seitenwänden auf den Radius R3 über.

Der Ofenkörper weist an den Stirnseiten (Stirnböden 9) einen Boden auf, der aus gewölbten Scheiben, gebogenen Blechen und gepreßten Formteilen zusammengesetzt ist.

Die Befestigung der Stirnböden (9) geht aus den Fig. 4a, 4b und 4c hervor.

Gemäß Fig. 4a wird ein gebogenes Blech oder werden gebogene Bleche und gewölbte Scheiben vor den Ofenmantel (Ofenkörper 1) geschweißt.

Nach Fig. 4b wird der Stirnboden in den Ofenmantel (Ofenkörper 1) eingesetzt und verschweißt.

In Fig. 4c erkennt man die Flanschverbindung des Stirnbodens (9) mit dem Ofenmantel (des Ofenkörpers 1).

Fig. 4d zeigt einen unsymmetrisch ausgeführten Stirnboden (9) nach Fig. 1, während Fig. 4e einen symmetrischen Stirnboden (9) zeigt.

Mit (10) ist der wassergekühlte Rohranschlußstutzen für die Evakuierung des Ofens bezeichnet.

Die feuerfeste Auskleidung des Ofenkörpers mit handelsüblichem Feuerfestmaterial ist mit (11) angedeutet.

Der in den Patentfiguren dargestellte Aluminium-Vakuum-Ofen kann auch unter Berücksichtigung verfahrensbedingter Abwandlungen als Aluminium-Schmelzofen oder auch als Aluminium-Mischer verwendet werden. Die in den Patentansprüchen angegebene Bauform bleibt identisch, wenn sich beim Schmelzofen und Mischer auch Details wie stirnseitige Öffnungen (Türen) ändern. Selbstverständlich fällt bei Schmelzöfen und Mischern der Evakuierungsstutzen fort.

**Patentansprüche**

1. Einseitig kippbarer Aluminium-Vakuum-Ofen, bestehend aus einem Ofenkörper mit stirnseitigen, verschließbaren Öffnungen zum Beschicken und Reinigen und einer seitlich angeordneten, verschließbaren Ausgießschnauze, mit der Maßgabe, daß der Ofenkörper (1) einen unsymmetrischen Ellipsenquerschnitt aufweist, wobei der Radius R1 des Ofenbodens (6) konstant ausgelegt ist, während der Radius R2 der Ofendecke (8) kleiner als R1 und der Radius R3 der Seitenwände kleiner als R2 ist, daß die Badtiefe unabhängig von der Ofengröße ist und daß die Badoberfläche (7) annähernd quadratisch ist.

2. Einseitig kippbarer Aluminium-Vakuum-Ofen nach Anspruch 1,
dadurch gekennzeichnet,
daß der Radius R2, bestimmt durch die Ofendecke (8) und durch die stirnseitigen Öffnungen (2), gerade so groß ausgelegt ist, daß die Ofendecke (8) selbsttragend ist.

3. Einseitig kippbarer Aluminium-Vakuum-Ofen nach den Apsrüchen 1 und 2,
dadurch gekennzeichnet,
daß die Radien R1 und R2 an den seitenwänden auf den Radius R3 übergehen.

4. Einseitig kippbarer Aluminium-Vakuum-Ofen nach Anspruch 1,
dadurch gekennzeichnet,
daß der Ofenkörper (1) an den Stirnseiten Stirnböden (9) aufweist, die aus gewölbten Scheiben, gebogenen Blechen und gepreßten Formteilen zusammengesetzt sind.

5. Einseitig kippbarer Aluminium-Vakuum-Ofen nach Anspruch 1,
dadurch gekennzeichnet,
daß die Beheizungseinrichtung je nach Schmelzleistung des Ofens aus einem oder mehreren Brennern (4) besteht, die stirnseitig oder am Ofenmantel angeordnet sind.

6. Einseitig kippbarer Aluminium-Vakuum-Ofen nach Anspruch 1,
dadurch gekennzeichnet
daß die verschließbaren Öffnungen (2) des Ofens gekühlt, insbesondere wassergekühlt sind.

7. Einseitig kippbarer Aluminium-Vakuum-Ofen nach den Ansprüchen 1 bis 6,
dadurch gekennzeichnet,
daß der Ofen unter Berücksichtigung verfahrensbedingter Abwandlungen als Aluminium-Schmelzofen oder als Aluminium-Mischer verwendbar ist.

**Claims**

1. Unilaterally tiltable aluminium vacuum oven consisting of an oven body with, at the ends, occludable apertures for charging end cleaning and with a laterally disposed occludable pourer nose, subject to the oven body (1) having an asymmetrical elliptical cross-section, the radius R1 of the oven bottom being constant while the radius R2 of the oven crown (8) is smaller than R1 and the radius R3 of the side walls is smaller than R2, and that the depth of the bath is independent of the oven size and that the surface (7) of the bath is substantially square.

2. Unilaterally tiltable aluminium vacuum oven according to Claim 1, characterised in that the radius R2 determined by the oven crown (8) and by the end apertures (2) is just large enough for the oven crown (8) to be self-supporting.

3. Unilaterally tiltable aluminium vacuum oven according to Claims 1 and 2, characterised in that the radius R1 and R2 merge into the radius R3 at the side walls.

4. Unilaterally tiltable aluminium vacuum oven according to Claim 1, characterised in that the oven body (1) comprises at the ends end members (9) which are assembled from convexly curved discs, dished plates and pressed mouldings.

5. Unilaterally tiltable aluminium vacuum oven according to Claim 1, characterised in that according to the fusion capacity of the oven, the heating means comprises one or a plurality of burners (4) disposed at the ends or on the oven casing.

6. Unilaterally tiltable aluminium vacuum oven according to Claim 1, characterised in that the occludable apertures (2) of the oven are cooled, in particular are water cooled.

7. Unilaterally tiltable aluminium vacuum oven according to Claims 1 to 6, characterised in that the oven can be used as an aluminium smelting oven or as an aluminium blender, to cake into account modifications required by the process.

## Revendications

1. Four sous vide, basculable d'un côté, pour le traitement de l'aluminium, four constitué d'un corps de four, avec des ouvertures frontales susceptibles d'être fermées, pour le chargement et le nettoyage, et avec un gueulard de coulée, disposé latéralement et susceptible d'être fermé, étant précisé que le corps de four (1) a une section transversale ellipsoïdale asymétrique, le rayon R1 du fond (6) du four étant constant, tandis que le rayon R2 de la voûte (8) du four est inférieur à R1, et que le rayon R3 des parois latérales est inférieur à R2, la profondeur du bain étant indépendante de la grandeur du four et la surface (7) du bain étant à peu près quadratique.

2. Four sous vide, basculable d'un côté, pour le traitement de l'aluminium, selon la revendication 1, caractérisé en ce que le rayon R2 déterminé par la voûte (8) du four et par les ouvertures frontales (2), a exactement la valeur nécessaire pour que la voûte (8) du four soit autoporteuse.

3. Four sous vide, basculable d'un côté, pour le traitement de l'aluminium, selon les revendications 1 et 2, caractérisé en ce que les rayons R1 et R2 deviennent, sur les parois frontales, le rayon R3.

4. Four sous vide, basculable d'un côté, pour le traitement de l'aluminium, selon la revendication 1, caractérisé en ce que le corps de four (1) comporte sur les faces frontales des fonds frontaux (9) qui sont composés de disques bombés, de tôles cintrées et de pièces moulées par compression.

5. Four sous vide, basculable d'un côté, pour le traitement de l'aluminium, selon la revendication 1, caractérisé en ce que le dispositif de chauffage est constitué, selon la puissance de fusion du four, d'un ou plusieurs brûleurs (4), disposés frontalement ou sur l'enveloppe du four.

6. Four sous vide, basculable d'un côté, pour le traitement de l'aluminium, selon la revendication 1, caractérisé en ce que les ouvertures (2) du four, susceptibles d'être fermées, sont refroidies et notamment refroidies par de l'eau.

7. Four sous vide, basculable d'un côté, pour le traitement de l'aluminium, selon les revendications 1 à 6, caractérisé en ce que ce four, sous réserve de modifications conditionnées par le traitement envisagé, est susceptible d'être utilisé pour la fusion de l'aluminium ou pour le mixage de l'aluminium.

Fig.1

11  7  1

Fig.4

9

2

4

2

6

Fig.2

3

C

9

9

2

A

B

2

4

1

10

D

Fig 3

Fig 4

a)  b)  c)

d)  e)

9

9